# EUROPÄISCHE PATENTSCHRIFT

(11) **EP 2 030 941 B1**
(45) Veröffentlichungstag und Bekanntmachung des Hinweises auf die Patenterteilung: **06.03.2013**
(21) Anmeldenummer: 08163226.7
(22) Anmeldetag: 29.08.2008
(51) Int. Cl.: B67C 3/22

(54) **Medienverteilvorrichtung**
Media distribution device
Dispositif de répartition de milieux

(30) Priorität: 01.09.2007 DE 102007041684
(43) Veröffentlichungstag der Anmeldung: 04.03.2009
(73) Patentinhaber: Krones AG, 93073 Neutraubling (DE)
(72) Erfinder: Burgmeier, Berthold, 89561, Dischingen/Eglingen (DE); Franz, Braun, 93053 Regensburg (DE)
(74) Vertreter: Bittner, Bernhard

(56) Entgegenhaltungen:
- AU-B2- 482 389
- DE-A1- 1 902 049
- DE-C- 885 662
- DE-U1-202006 000 325
- US-A- 2 169 573
- US-A- 2 372 899

## Beschreibung

Die vorliegende Erfindung bezieht sich auf eine Verteilvorrichtung für Medien, gemäß dem Oberbegriff des Anspruchs 1, und insbesondere für Getränke, sowie auf eine für eine derartige Verteilvorrichtung verwendbare Dichtungseinrichtung gemäß dem Oberbegriff des Anspruchs 10 und wie aus der US 2 169 573 bekannt. Im Bereich der Getränke herstellenden Industrie sind aus dem Stand der Technik Verteilbehältnisse für Getränke bekannt, welche das betreffende Getränk aus einem Behälter in eine Vielzahl von einzelnen Abfülleinrichtungen verteilen, damit diese Abfülleinrichtungen wiederum das Getränk in die zu befüllenden Behältnisse einbringen können.

Dabei ist es ebenfalls bekannt, dass in die entsprechenden Verteilbehältnisse neben dem abzufüllenden Getränk auch ein zweites Medium und insbesondere ein Gas eingefüllt wird. Dieses Gas ist dabei ebenso wie das Getränk steril und dient dazu, um denjenigen Raum, um den der Füllstand des Getränkes absinkt, wieder steril aufzufüllen und damit steril zu halten. Derartige Vorrichtungen sind dabei teilweise auf Karussellen angeordnet, sodass einige Elemente dieser Vorrichtungen gegenüber anderen drehbar angeordnet sind.

Aus der DE 1 902 048 ist eine Zuleitung für Flüssigkeiten und Gase in Füllmaschinen bekannt. Dabei ist ein zentrales Flüssigkeitsrohr vorgesehen, welches die abzufüllende Flüssigkeit in Richtung darüber angeordneter Verteilrohre transportiert. Diese Verteilrohre wiederum fördern die Flüssigkeit in die einzelnen Behältnisse.

Die DE 196 44 399 C1 beschreibt eine Vorrichtung zur Reinigung von koaxial angeordneten Füller-Außenblechen. Dabei ist eine ringförmige um die Füllachse drehende Drehdurchführung vorgesehen, die daran angeordnete Sprühdüsensysteme aufweist.

Aus der DE 296 20 323 U1 ist ein Drehverteiler für rotierende Gefäßfüllmaschinen bekannt. Dieser Drehverteiler weist Zuführleitungen auf, die gemeinsam mit einem Ringkessel drehbar sind. Über eine Vielzahl von Ringnuten werden über ein stationäres Element dem Ringkessel ein Getränk und ein Gas zugeführt.

Diese Vorrichtung arbeitet zufrieden stellend, jedoch ist ein hoher Dichtungsaufwand erforderlich, um in Zuführleitungen die Flüssigkeit bzw. das Gas zuzuführen.

Die DE 601 23 407 T2 beschreibt eine Dichtung für eine Drehkupplung zwischen einem Flüssigkeitsverteilungsrohr und einem Drehkessel in Abfüllanlagen. Dabei ist eine Zuleitung vorgesehen, die einen stationären Abschnitt und einen diesen gegenüber drehbaren Abschnitt aufweist.

Der vorliegenden Erfindung liegt daher die Aufgabe zugrunde, die aus dem Stand der Technik bekannten Medienverteiler hinsichtlich ihrer Abfüllzuverlässigkeit zu verbessern. Daneben soll der Herstellungsaufwand für die herzustellenden Medienverteiler gesenkt werden. Diese Aufgaben werden durch den Gegenstand der unabhängigen Ansprüche 1 und 10 erreicht. Vorteilhafte Ausführungsformen und Weiterbildungen sind Gegenstand der Unteransprüche.

Eine erfindungsgemäße Verteilvorrichtung für Medien und insbesondere für Getränke weist ein Behältnis, welches zur Aufnahme der Medien geeignet ist, auf. Weiterhin ist eine erste Zuführleitung vorgesehen, welche dem Behältnis ein erstes bevorzugt flüssiges Medium zuführt, sowie eine zweite Zuführleitung, welche dem Behältnis ein zweites bevorzugt gasförmiges Medium zuführt.

Erfindungsgemäß sind die erste Zuführleitung und die zweite Zuführleitung stationär gegenüber einander angeordnet und das Behältnis ist gegenüber der ersten Zuführleitung und der zweiten Zuführeinordnung drehbar angeordnet, wobei die erste Zuführleitung und die zweite Zuführleitung in einem Bereich des Behältnisses in dieses münden, der stets, d.h. unabhängig von einem Füllzustand des Behältnisses oberhalb eines maximalen Füllstandes des ersten flüssigen Mediums liegt, ist zwischen den drehenden Bestandteilen und den stehenden Bestandteilen der Dichtungseinrichtung einTrennmedium vorgesehen. Vorzugsweise kann es sich dabei um heißen Dampf handeln, der eine Barriere bildet, damit das gasförmige Medium nicht über die Dichtungseinrichtung aus der Vorrichtung austreten kann.

Bei dem Behältnis handelt es sich insbesondere um einen Zusatzbehälter, von dem aus die einzelnen zu befüllenden Behältnisse abgefüllt werden. Bei dem ersten flüssigen Medium handelt es sich bevorzugt um das einzufüllende Getränk und bei dem zweiten Medium um ein Sterilgas, insbesondere um Sterilluft, sterilen Stickstoff (N₂) oder Kohlendioxid (CO₂). Unter den Zuführleitungen werden dabei insbesondere diejenigen Zuführleitungen verstanden, welche die Medien unmittelbar in das Behältnis einführen. Vorzugsweise ragen diese Zuführleitungen wenigstens abschnittsweise in das Behältnis hinein. Bei einer weiteren vorteilhaften Ausführungsform ist wenigstens eine Dichtungseinrichtung vorgesehen, welche die Zuführleitungen gegenüber dem Behältnis abdichtet, wobei die Dichtungseinrichtung nicht mit dem ersten flüssigen Medium in Kontakt steht. Genauer gesagt steht kein Element der Dichtungseinrichtung mit dem ersten flüssigen Medium in Kontakt. Dabei muss die Dichtungseinrichtung nicht unmittelbar zwischen den Zuführleitungen und dem Behältnis angeordnet sein, es können auch weitere Elemente zwischen der Dichtungseinrichtung und dem Behältnis vorgesehen sein.

Wie oben ausgeführt, dreht sich das Behältnis gegenüber den Zuführleitungen, wobei eine Dichtung für diesen Drehvorgang vorgesehen ist. Damit werden erfindungsgemäß über die Verteilvorrichtungen zwei sterile Medien gemeinsam zugeführt. Dadurch, dass die Dichtungseinrichtung nicht mit dem ersten flüssigen Medium in Kontakt steht, wird erreicht, dass nur eine Dichtungseinrichtung für beide Medien verwendet werden kann. Durch die Vermeidung eines direkten Kontakts zwischen dem ersten Medium und der Dichtungseinrichtung wird auch eine Verschmutzung der Dichtungseinrichtung durch das erste Medium verhindert. Genauergesagt ist die Dichtungseinrichtung vorzugsweise nur mit dem zweiten Medium, d. h. mit dem sterilen Gas in Kontakt, sodass auf diese Weise keine Verschmutzungen der Dichtungseinrichtung eintreten können.

Vorzugsweise werden die Medien von oben in das Behältnis eingeführt und die Dichtungseinrichtung liegt oberhalb des Füllstandes des ersten Mediums. Bei einer weiteren vorteilhaften Ausführungsform sind die erste Zuführleitung und die zweite Zuführleitung innerhalb eines Rohres angeordnet. Dieses Rohr ist dabei vorzugsweise drehfest mit der ersten Zuführleitung und der zweiten Zuführleitung verbunden. Weiterhin ist es auch möglich, dass eine Zuführleitung innerhalb der anderen Zuführleitung geführt wird. Vorzugsweise wird die Zuführleitung für das gasförmige Medium neben der Zuführleitung für das erste Medium und bevorzugt auch parallel hierzu geführt. Es wäre jedoch auch möglich, eine Zuführleitung innerhalb der anderen Zuführleitung zu führen.

Bei einer weiteren vorteilhaften Ausführungsform ist das Behältnis drehbar angeordnet und damit sind die Zuleitungen stationär. Über das drehbare Behältnis ist es wiederum möglich, die einzelnen Füllorgane für die Behältnisse zu versorgen.

Bei einer weiteren vorteilhaften Ausführungsform wird das Trennmedium über einen Anschluss zugeführt, wobei dieser Anschluss stationär angeordnet ist. Zu diesem Zweck weist bevorzugt die Vorrichtung ein stationär angeordnetes Gehäuse auf, und in diesem Gehäuse ist eine Zuführungsleitung für das Trennmedium vorgesehen.

Vorzugsweise ist wenigstens eine Zuführleitung als ein sich abschnittsweise in der Richtung der Drehachse des Behältnisses erstreckendes Rohr ausgebildet. Dabei ist bevorzugt die erste Zuführleitung für das flüssige Medium rotationssymmetrisch bezüglich der Drehachse ausgeführt.

Bei einer weiteren vorteilhaften Ausführungsform ist die Dichtungseinrichtung eine Gleitringdichtung. Vorzugsweise weist die Dichtungseinrichtung eine stationär angeordnete Wellenhülse auf, innerhalb derer die Zuführleitungen angeordnet sind.

Bei einer weiteren vorteilhaften Ausführungsform ist an dem Ausgang der zweiten Zuführleitung wenigstens ein Verteilerkopf vorgesehen, welcher das Medium in mehrere Raumrichtungen verteilt. Genauer gesagt ist dieser Verteilerkopf dazu gedacht, um das gasförmige Medium innerhalb des Behältnisses in mehrere Raumrichtungen zu verteilen bzw. zu sprühen.

Die vorliegende Erfindung ist weiterhin auf eine Dichtungseinrichtung mit einer Lagereinheit, insbesondere für eine Vorrichtung der oben beschriebenen Art gerichtet. Es wird jedoch darauf hingewiesen, dass die erfindungsgemäße Dichtungseinrichtung auch für Medienverteilvorrichtungen verwendet werden kann, welche nur ein Medium verteilen.

Die erfindungsgemäße Dichtungseinrichtung mit einer Lagereinheit für eine Verteilvorrichtung für Medien weist eine stationär angeordnete Wellenhülse auf, wobei innerhalb der Wellenhülse wenigstens eine Zuführleitung für ein Medium führbar ist. Weiterhin ist ein gegenüber der Wellenhülse drehbar angeordnetes Gehäuse vorgesehen, welches bezüglich einer Drehachse des Gehäuses radial außerhalb der Wellenhülse angeordnet ist. Erfindungsgemäß lagert die Lagereinheit das Gehäuse drehbar gegenüber der Wellenhülse, wobei die Lagereinheit in der Richtung der Drehachse gegenüber der Dichtungseinrichtung versetzt ist.

Während im Stand der Technik die Dichtungseinrichtungen und die Lagereinheiten auf der gleichen Höhe angeordnet sind, sind erfindungsgemäß die Dichtungseinrichtung und die Lagereinheit versetzt zueinander angeordnet. Auf diese Weise werden die Lagereinheit betreffende Elemente, wie beispielsweise Wälzlager, aus dem Bereich der Dichtungseinrichtung herausgehalten. Die Lagereinheit übernimmt hier auch die Funktion einer sehr präzisen Führung der Dichtungseinrichtung, genauer einer sehr präzisen Führung des Gehäuses gegenüber der Wellenhülse.

Bevorzugt ist die Lagereinheit oberhalb der Dichtungseinrichtung angeordnet, wobei diese Ausführungsform insbesondere für Verteilvorrichtungen der oben beschriebenen Art interessant ist.

Vorteilhaft ist die Lagereinheit mittels Verbindungsstiften von der Dichtungseinrichtung in der Richtung der Drehachse beabstandet. Durch diese Verbindungsstifte kann Raum zur Unterbringung von Kanälen, beispielsweise zur Führung eines Sperrmediums für die Dichtungseinrichtung, gewonnen werden. Bevorzugt handelt es sich bei der Dichtungseinrichtung um eine Gleitringdichtung. Sämtliche Elemente dieser Gleitringdichtung sind bevorzugt durch die Verbindungsstifte von der Lagereinheit beabstandet.

Vorzugsweise ist in einer radialen Richtung gegenüber der Drehachse zwischen der Wellenhülse und dem Gehäuse ein Sperrmedium führbar.

Vorteilhaft ist unterhalb der Dichtungseinrichtung ein Verteilerblock angeordnet, der das Medium in der bezüglich der Drehachse radialen Richtung führt. In dieser Ausführungsform ist die Dichtungseinrichtung insbesondere für eine Verwendung in Ausblaseinrichtungen für Behältnisse interessant.

Die vorliegende Erfindung ist schließlich auf eine Verteilvorrichtung für Medien der oben beschriebenen Art mit einer Dichtungseinrichtung mit Lagereinheit der oben beschriebenen Art gerichtet.

Weitere Vorteile und Ausführungsformen ergeben sich aus den beigefügten Zeichnungen:
Darin zeigen:
   - Fig. 1: eine erfindungsgemäße Anordnung zum Verteilen von Medien;
   - Fig. 2a: eine Teilansicht der Anordnung aus Fig. 1 während des Produktionsvorgangs;
   - Fig. 2b: eine Teilansicht der Anordnung aus Fig. 1 und eines Reinigungsvorgangs;
   - Fig. 3: eine Dichtungseinrichtung der erfindungsgemäßen Verteilvorrichtung
   - Fig. 4: die Dichtungseinrichtung aus Fig. 3 unter Berücksichtung eines Sperrmediums;
   - Fig. 5a: eine Draufsicht auf eine Dichtungseinrichtung mit Lagereinheit;
   - Fig. 5b: eine Schnittdarstellung der Vorrichtung aus Fig. 5a entlang der Linie A-A aus Fig. 5a;

   - Fig. 5c: eine Schnittdarstellung entlang der Linie B-B aus Fig. 5a;
   - Fig. 5d: eine Schnittdarstellung entlang der Linie C-C aus Fig. 5a;
   - Fig. 5e: eine perspektivische Darstellung der Vorrichtung aus Fig. 5a;
   - Fig. 6a: eine Draufsicht auf eine Dichtungseinrichtung mit Lagereinheit in einer weiteren Ausführungsform;
   - Fig. 6b: eine Schnittdarstellung der Dichtungseinrichtung aus Fig. 6a entlang der Linie A-A aus Fig. 6a;
   - Fig. 6c: eine Schnittdarstellung entlang der Linie B-B aus Fig. 6a;
   - Fig. 6d: eine Schnittdarstellung entlang der Linie C-C aus Fig. 6a;
   - Fig. 6e: eine perspektivische Darstellung der Vorrichtung aus Fig. 6a;
   - Fig. 7a: eine Draufsicht auf eine Dichtungseinrichtung mit Lagereinheit in einer weiteren Ausführungsform;
   - Fig. 7b: eine Schnittdarstellung der Dichtungseinrichtung aus Fig. 7a entlang der Linie A-A aus Fig. 7a;
   - Fig. 7c: eine Schnittdarstellung entlang der Linie B-B aus Fig. 7a;

   - Fig. 7d: eine Schnittdarstellung entlang der Linie C-C aus Fig. 7a;
   - Fig. 7e: eine perspektivische Darstellung der Vorrichtung aus Fig. 7a; und
   - Fig. 8: die erfindungsgemäße Vorrichtung in einer weiteren Ansicht.

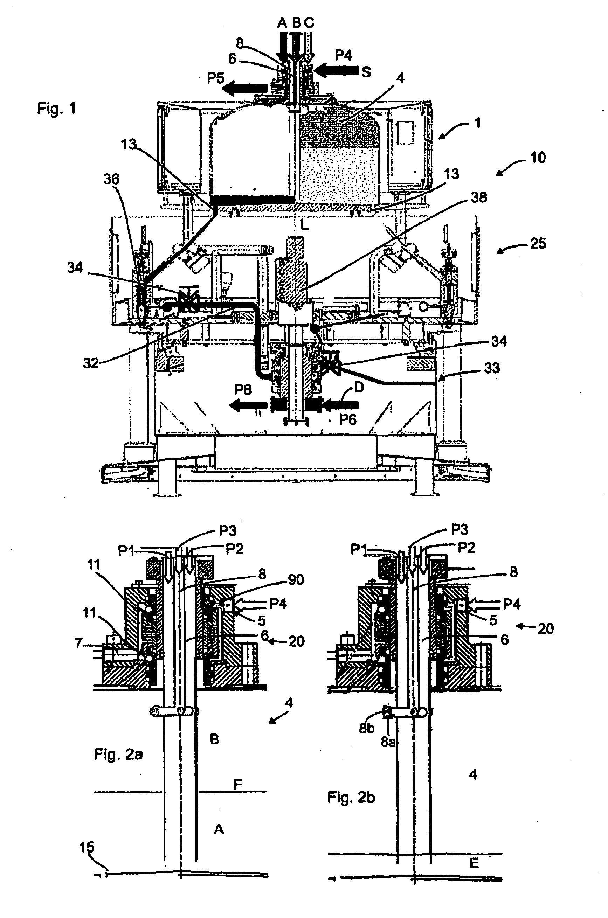

Fig. 1 zeigt eine erfindungsgemäße Anordnung 10 zum Verteilen von Medien. Dabei werden, wie durch die Pfeile dargestellt, von oben sowohl das abzufüllende Produkt A, d. h. das Getränk, als auch ein Sterilgas B, wie z. B. Sterilluft oder Sterilkohlendioxid in ein Behältnis 4 eingefüllt. Entlang der quer verlaufenden Pfeile P4, P5 wird ein Sperrmedium S wie z. B. Dampf durch eine (unten im Detail erläuterte) Dichtungseinrichtung der Vorrichtung geschleust. Die linke Seite der Figur veranschaulicht dabei einen Reinigungsbetrieb und die rechte Seite einen Produktionsbetrieb. Das Bezugszeichen C bezieht sich auf eine Reinigungsflüssigkeit.

Das Bezugszeichen 13 bezieht sich auf einen Auslass in dem Behältnis 4, über welchen während des Produktionsvorganges das Getränk abgelassen werden kann (bzw. während des Reinigungsvorgangs ein Reinigungsmittel). Ausgehend von diesem Ablass 13 gelangt das Getränk über Einfülleinrichtungen 36 in die zu befüllenden Behältnisse. Die einzelnen Einfülleinrichtungen 36 sind dabei, ebenso wie das Behältnis 4, drehbar angeordnet.

Während des Reinigungsvorgangs wird die Reinigungsflüssigkeit ebenfalls durch die Öffnungen 13 und die Einfülleinrichtungen 36 geführt, dann jedoch über eine Abführungsleitung 32 weitergeführt. Zwei Aseptikventile 34 sind während der Getränkeproduktion geschlossen. Das Bezugszeichen 33 bezieht sich auf einen rotierenden Sprühkopf (nur schematisch dargestellt) für die Reinigung. Entlang des Pfeils P8 gelangt das Reinigungsmiedium C wieder aus der Anordnung und entlang des Pfeils P9 kann ein weiteres Reinigungsmittel D zur Isolatorreinigung zugeführt werden.

Damit wird erfindungsgemäß eine Verteileinrichtung für zwei sterile Medien gemeinsam vorgeschlagen, wobei, wie oben erwähnt, nur eine Dichtungseinrichtung für beide Medien nötig ist.

Fig. 2a zeigt eine Detailansicht der Vorrichtung 1 aus Fig. 1, genauer, eine Dichtungseinrichtung 20, während der Produktion von Getränken. Dabei wird entlang der Pfeile P1 und P2, d. h. über die Zuführleitung 6 das sterile Getränk eingeführt und entlang des Pfeils P3, d. h. die zweite Zuführeinleitung 8 mit einem sterilen Gas überlagert. Über eine Dampfzuführung 5 wird der Verteileinrichtung Dampf zugeführt, welcher als Sperrmedium wirkt. Dabei ist der Einlass 5 in einem stationären Bereich der Verteileinrichtung angeordnet. Über einen Auslass 7 wird der Dampf aus der Dichtungseinrichtung 20 wieder abgelassen, wobei an diesem Auslass 7 eine Sensoreinrichtung zur Bestimmung der Temperatur des Dampfes angeordnet sein kann.

Das Bezugszeichen 11 bezieht sich in seiner Gesamtheit auf mechanische Dichtungselemente, die beispielsweise aus Graphit oder SIC hergestellt sein können. Innerhalb des Behältnisses 4 (nur schematisch dargestellt) bezeichnet das Bezugszeichen F den Füllstand des sterilen Produkts A und oberhalb des sterilen Produkts ist das gasförmige Medium B, d. h. das sterile Gas, angeordnet. Das Bezugszeichen 15 bezieht sich auf ein Pufferbehältnis für das Produkt, das auf der Spitze der Fülleinrichtung 25 (vgl. Fig. 1) angeordnet ist. Dieses Pufferbehältnis 15 verhindert bei einem niedrigen Füllstand des Mediums A, dass Luft in die Fülleinrichtung 25 gerät. Das Behältnis 4 ist, wie Eingangs erwähnt, drehbar um eine Achse L angeordnet.

Fig. 2b bezieht sich auf die Vorrichtung aus Fig. 1 in einem Reinigungsmodus. Dabei wird entlang des Pfeils P3 heißes Wasser zum Reinigen der Sprühköpfe 8b, die am Ende 8a der zweiten Zuführleitung 8 angeordnet sind, eingeführt. Entsprechend kann auch entlang des Pfeils P2 heißes Wasser zum Auffüllen des Pufferbehältnisses 15 eingeführt werden. Entlang des Pfeils P1 kann Sterilluft eingeführt werden, um den Pufferraum 15 unter Druck zu setzen.

Innerhalb des Behältnisses 4 ist im Reinigungsmodus heißes Wasser vorgesehen, welches durch die stationären Sprühkugeln ausgesprüht wurde. In einem unteren Bereich E befindet sich heißes Wasser unter Druck.

Man erkennt in den Fig. 2a und 2b, dass die Dichtungseinrichtung 20 in ihrer Gesamtheit stets oberhalb des Niveaus F der Flüssigkeit angeordnet ist. Damit kann die Dichtungseinrichtung für den Sterilverteiler ähnlich ausgeführt werden wie eine mechanische Dichtung für Rührer. Weiterhin wird eine vollständige Abdichtwirkung während aller Druckstadien erreicht und eine druckunabhängige Abdichtung. Weiterhin wird auch vermieden, dass das abzufüllende Produkt A mit heißen Oberflächen, genauer gesagt heißen Oberflächen wegen der Dampfbarriere, in Berührung kommt. Die Dichtungseinrichtung 20 im oberen Bereich von Fig. 1 und die nicht sterile Fülleinrichtung 25 sind separate Einheiten.

Eine Reinigung des Pufferbehältnisses 15 erfolgt über die erste Zuführleitung 6 und die Sprühkugeln 8b. Die Reinigung kann beispielsweise zunächst durch ein Spülen mit Wasser, anschließend eine heiße alkalische Reinigung, eine weitere Spülung mit Wasser, falls benötigt, eine anschließende säurehaltige heiße Reinigung und schließlich eine weitere Spülung mit Wasser durchgeführt werden.

Auch eine SIP- (Sterilisation in place) -Reinigung ist möglicht. Diese kann dadurch erfolgen, dass das Pufferbehältnis mit unter Druck stehenden heißen Wasser durch die Sprühkugeln 8b gesprüht wird, wobei dieser Überdruck, wie oben erwähnt, durch die sterile Luft durch die erste Zuführleitung 6 erreicht wird. Weiterhin ist eine Sterilisation dadurch möglich, dass das Pufferbehältnis mit unter Druck stehenden heißen Wasser überfüllt wird, wobei das heiße Wasser über die erste Zuführleitung (die Produktleitung) eingeführt und über die Sprühkugeln 8b ausgelassen wird (um Luft aus dem Pufferbehältnis 15 zu entfernen).

Schließlich ist eine Sterilisierung auch durch Spülen mit unter Druck stehenden Dampf möglich, wobei hier der Dampf über die erste Zuführleitung und die Sprühkugeln eingeführt wird.

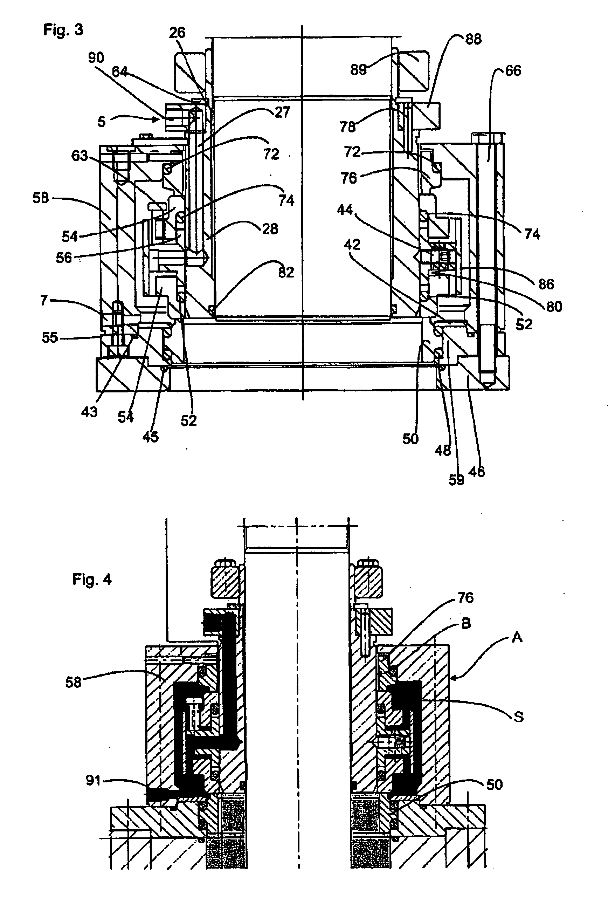

Fig. 3 zeigt eine Dichtungseinrichtung in Form einer Gleitringdichtung 20 für die Vorrichtung aus Fig. 1. Die Gleitringdichtung 20 ist dabei oberhalb des Behältnisses 4 angeordnet. Die Gleitringdichtung weist eine Hülse bzw. eine Wellenhülse 28 auf. Diese Wellenhülse 28 ist stehend angeordnet und innerhalb der Wellenhülse sind (nicht gezeigt) die beiden Zuführleitungen für die Medien A und B angeordnet. Das Bezugszeichen 82 bezieht sich auf einen O-Ring, um die Wellenhülse 28 gegenüber einem Rohr 26 abzudichten.

Auf der Wellenhülse 28 sind mittels zwei O-Ringen 74, 52, zwei Gleitringe 54 angeordnet. Diese Gleitringe sind gegenüber einem Stellring 56 mittels einer Feder 80 abgestützt. Das Bezugszeichen 86 bezieht sich auf eine Leithülse, die gegenüber den Gleitringen 54 angeordnet ist. Das Bezugszeichen 44 zeigt einen Gewindestift zum Arretieren des Stellrings 56. Das Bezugszeichen 88 zeigt einen Anschlussring, der mit Hilfe eines Zylinderstifts 78 fest an der Wellenhülse 28 angeordnet ist.

Oberhalb dieses Anschlussrings 88 ist eine Schrumpfscheibe 89 vorgesehen. Sowohl die Wellenhülse 28, als auch die Gleitringe 54, der Anschlussring 88, und die Schrumpfscheibe 89 sind stehend angeordnet. Über einen Anschluss 90 (der als Einlass 5 fungiert, siehe Fig. 2a, 2b) wird durch einen Kanal 27 der Gleitringdichtung ein Sperrmedium und insbesondere Dampf zugeführt. Der Kanal 27 ist dabei in der Wellenhülse 28 angeordnet. Damit ist auch der Einlass für den Dampf stehend angeordnet. Das Bezugszeichen 76 bezieht sich auf einen Gegenring, der mit Hilfe eines O-Rings 72 gegenüber einem Gehäuse 58 abgestützt ist. Dieses Gehäuse 58 ist wiederum mit Hilfe einer Sechskantschraube 66 drehfest an dem (nicht genauer gezeigten) Rand 46 des Behältnisses angeordnet. Das Bezugszeichen 50 zeigt einen weiteren Gegenring, der mit Hilfe von O-Ringen 48 gegenüber einem Flansch 59 abgestützt ist, wobei dieser Flansch 59 an dem Gehäuse 58 angeordnet ist. Die Bezugszeichen 43 und 45 beziehen sich ebenfalls auf O-Ringe und das Bezugszeichen 55 auf eine Zylinderschraube zum Befestigen des Flansches 59 an dem Gehäuse 58. Das Bezugszeichen 63 kennzeichnet eine weitere Zylinderschraube.

Der Dampfauslass 7 ist vorzugsweise gegenüber dem gezeigten Dampfeinlass 5 in der Höhe versetzt und kann auch in Umfangsrichtung um einen vorgegebenen Winkel gegenüber dem Einlass versetzt sein.

Das Gehäuse 58 und die beiden Gegenringe 50 und 76 sind gemeinsam mit dem Behältnis drehbar angeordnet.

Wie unter Bezugnahme auf Fig. 4 erläutert, werden die stehenden Teile und die drehenden Teile durch das Sperrmedium, bei dem es sich beispielsweise um Dampf handelt, getrennt. Dieses Sperrmedium ist in Fig. 4 durch die schwarz dargestellten Bereiche S gekennzeichnet. Radial innerhalb dieser schwarz gekennzeichneten Bereiche S befinden sich die stehenden Teile der Gleitringdichtung und außerhalb die drehenden Teile, wie beispielsweise das Gehäuse 58 und die beiden Gegenringe 50 und 76. Außerdem ist in Fig. 4 gezeigt, dass der Auslass weiter außen angeordnet ist als der Einlass und genauer gesagt, dass der Auslass in einem drehenden Element, nämlich dem Gehäuse 58 vorgesehen ist.

Empfehlenswert ist daher, eine Ausführung der Gleitringdichtung als Cartridge-Einheit mit einer Wellenhülse 28 zur Erzeugung eines Luftpolsters (gleichzeitig Temperaturisolator) zwischen dem Innenverteiler und dem Dampfraum. Wie gezeigt, dient diese Wellenhülse 28 auch als Dampfversorgung und Rückführung, da es sich dabei um ein stehendes Bauteil handelt und weiterhin wird auch ein Temperatureintrag auf den Innenverteiler (in dem die beiden Zuführleitungen 68 angeordnet sind) verhindert. Weiterhin werden auch die Lagerung und die Dichtung funktionell getrennt, sodass die Lagerung als eine eigene montagefertige Baugruppe oberhalb der Dichtungseinrichtung vorgesehen sein kann. Auf Grund der geringen Drehzahlen und der geringen Drücke ist ein Trockenlauf der Gleitringdichtung 20 möglich.

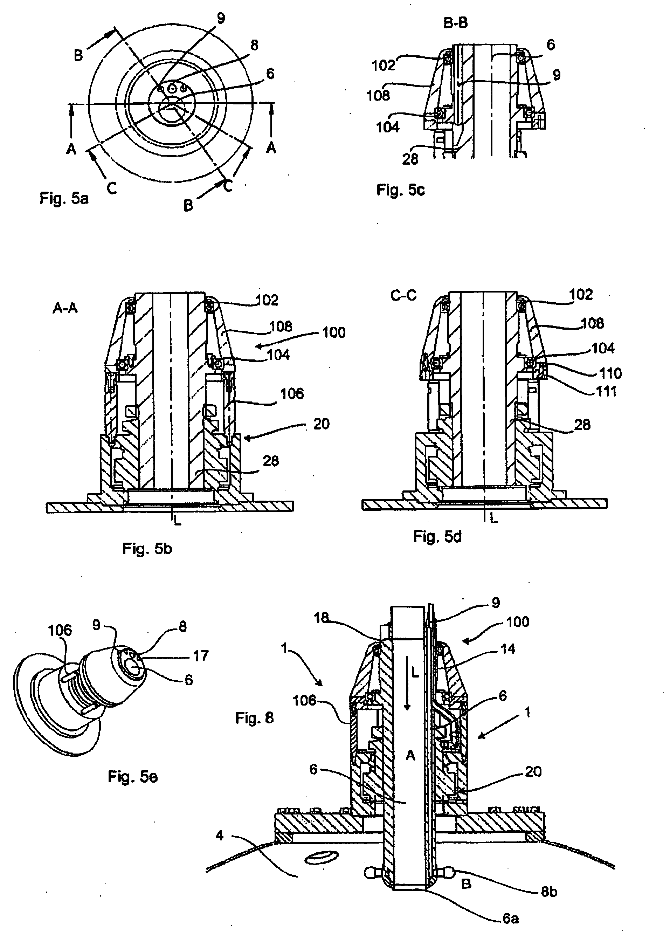

Fig. 5a zeigt eine Draufsicht auf eine erfindungsgemäße Dichtungseinrichtung 20 mit Lagereinheit, wobei das Behältnis nicht gezeigt ist. Dabei bezieht sich Bezugzeichen 6 auf die erste Zuführleitung für das Medium A, das Bezugszeichen 8 auf die zweite Zuführleitung für das Medium B und das Bezugszeichen 9 auf die Zuführleitung für das Sperrmedium S.

Fig. 5b zeigt eine teilweise Seitendarstellung der erfindungsgemäßen Vorrichtung entlang der Linie A-A aus Fig. 5a. Dabei zeigt das Bezugszeichen 20 wiederum die in Fig. 3 detailliert dargestellte Gleitringdichtung 20. Oberhalb der Gleitringdichtung 20 ist eine Lagereinheit 100 vorgesehen, um die Gleitringdichtung gegenüber der Wellenhülse 28 abzustützen. Diese Lagereinheit 100 weist zwei Wälzlagereinheiten 102 und 104 auf. Über Verbindungsstifte 106 ist die Lagereinrichtung 100 mit der Gleitringdichtung 20 verbunden. In dem Bereich der Lagereinheit 20 sind die beiden Zuführleitungen 6 und 8 sowie die Zuführleitung 9 für das Sperrmedium S parallel zueinander, was eine sehr klein bauende Bauweise ermöglicht

Fig. 5c zeigt eine teilweise Seitendarstellung der Vorrichtung entlang der Linien B-B aus Fig. 5a. Man erkennt hier die Zuleitung 9 für das Sperrmedium, welche innerhalb der Hülse 28 angeordnet ist. Daneben ist ein schräg verlaufendes Lagergehäuse 108 erkennbar, der zur Stabilisierung der gesamten Vorrichtung dient.

Fig. 5d zeigt eine weitere Seitenansicht der erfindungsgemäßen Vorrichtung entlang der Linien C-C aus Fig. 5a. Man erkennt hier einen Haltering 110 der mittels Schraubverbindungen 111 an den Lagerabschnitt 108 angeschraubt ist.

Fig. 5e zeigt eine perspektivische Ansicht der in Fig. 5b gezeigten Einheit. Man erkennt, dass neben den drei Zuführleitungen 6, 8 und 9, eine weitere Leitung 17 vorgesehen ist. Diese weitere Leitung 17 kann beispielsweise zur Rückführung des Sperrmediums eingesetzt werden.

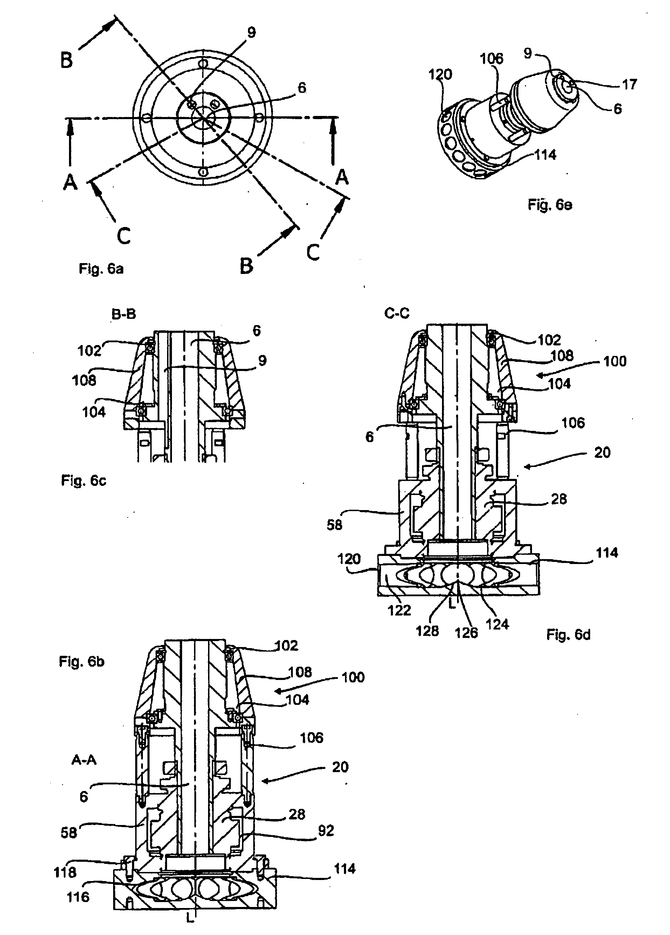

Fig. 6a zeigt eine Draufsicht auf eine erfindungsgemäße Dichtungseinrichtung mit Lagereinheit in einer weiteren Ausführungsform. Einige Bestandteile dieser Dichtungseinrichtung sind entsprechend der in den Fig. 5a bis Fig. 5e gezeigten Dichtungseinrichtung mit Lagereinheit ausgeführt, sodass insoweit auf die obige Beschreibung verwiesen wird.
Die in den Fig. 6a - 6e gezeigte Dichtungseinrichtung ist beispielsweise für die Verwendung in Vorwärmer- und Ausblaseinheiten gedacht. Daher ist hier die zweite Zuführleitung 8 nicht vorhanden, sondern nur eine erste Zuführleitung 6, durch die jedoch bei der in den Fig. 6a - 6e gezeigten Ausführungsform ein gasförmiges Medium, beispielsweise warme Luft oder dergleichen geführt wird. Wie in Fig. 6a gezeigt, ist diese erste Zuführleitung 6 zentral bezüglich der Dichtungseinrichtung 20 und der Lagereinheit 100 angeordnet.

Fig. 6b zeigt einen Schnitt der Lagereinheit entlang der Linie A - A aus Fig. 6a. Man erkennt auch hier, dass die Lagereinheit 100 mit der Dichtungseinrichtung 20 über die Verbindungsstifte 106 beabstandet ist. Zusätzlich zu der in den Fig. 5a - 5e gezeigten Ausführungsform weist die in den Fig. 6a - 6e gezeigte Dichtungseinrichtung 20 mit Lagereinheit 100 auch einen Verteilerblock 114 auf, über den das durch die Zuführleitung 6 gelangende Medium in radialer Richtung nach außen geleitet wird. Dieser Verteilerblock 114 ist mittels Verbindungsstiften bzw. Schrauben 118 an dem Gehäuse 58 bzw. dem Flansch 59 (Fig. 3) angeordnet und dreht sich im Betrieb mit diesem Gehäuse 58 mit.

Fig. 6c zeigt eine Schnittdarstellung der Lagereinheit 100 entlang der Linie B - B aus Fig. 6a. Man erkennt, dass auch bei dieser Ausführungsform die Zuführleitung 9 für das Sperrmedium S vorgesehen ist. Es wird in diesem Zusammenhang noch einmal darauf hingewiesen, dass die Dichtungseinrichtung bevorzugt einen zwischen dem Gehäuse 58 und der Wellenhülse 28 gebildeten Raum für das Sperrmedium S aufweist.

Fig. 6d zeigt einen Schnitt durch die Dichtungseinrichtung 20 mit Lagereinheit 100 entlang der Linie C - C aus Fig. 6a. Man erkennt hier, dass der Verteilerblock 114 in seinem Inneren in radialer Richtung nach außen verlaufende Kanäle 122 aufweist. Diese Kanäle 122 führen zu Öffnungen 120 am Außenumfang des Verteilerblocks 114. Die einzelnen Kanäle 122 sind in Umfangsrichtung des Verteilerblocks 114 bezüglich der Drehachse L gleichmäßig verteilt. Weiterhin weist die Verteilereinrichtung bzw. der Verteilerblock 114 einen Boden 124 auf, der derart gekrümmt ist, dass das durch die Zuführleitung 6 auf ihn treffende Medium, bei dem es sich insbesondere um ein gasförmiges Medium handelt, nach außen gedrängt wird. Genauer gesagt weist der Boden 124 eine Spitze 126 in seinem Zentrum auf und fällt von dort radial nach außen ab. Das Medium wird daher in dem Verteilerblock 114 hinsichtlich seiner Strömungsrichtung umgelenkt. An die Spitze 126 schließt sich ein gekrümmter Abschnitt 128 auf, der ebenfalls zum Leiten des Mediums dient.

Fig. 6e zeigt eine perspektivische Ansicht der in Fig. 6b gezeigten Dichtungseinrichtung 20 mit Lagereinheit 100. Man erkennt hier, dass die Öffnungen 120 kreisförmig ausgebildet sind und in Umfangsrichtung gleichmäßig um den Außenumfang des Verteilerblocks 114 angeordnet sind. An diese Öffnungen 120 schließen sich (nicht gezeigte) Zuleitungen an, die wiederum in Befüllungseinrichtungen für Behältnisse münden können.

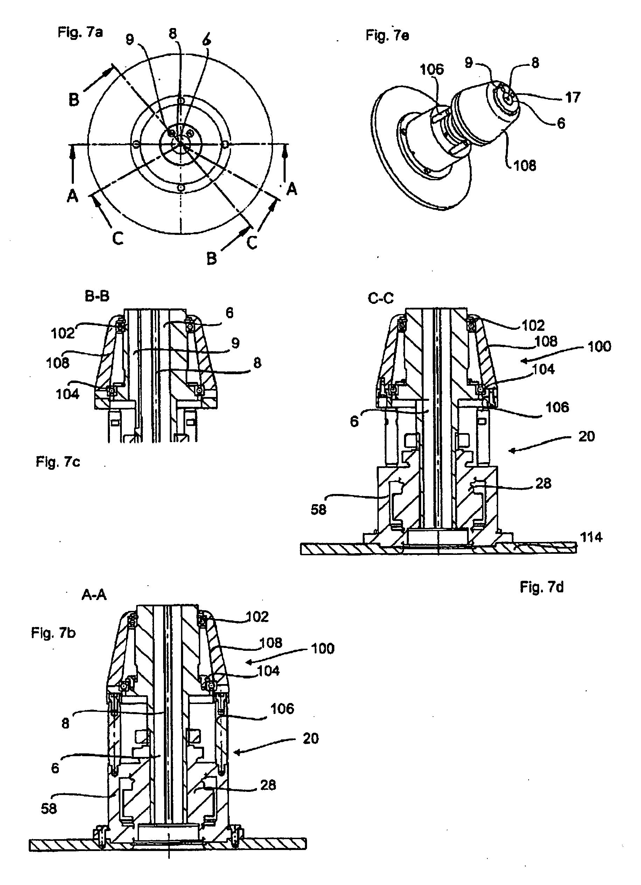

Fig. 7a zeigt eine Draufsicht auf eine weitere Ausführungsform einer erfindungsgemäßen Dichtungseinrichtung mit Lagereinheit. Bei dieser Ausführungsform verläuft die zweite Zuführleitung 8 innerhalb der ersten Zuführleitung 6. Genauer gesagt sind die erste Zuführleitung 6 und die zweite Zuführleitung 8 koaxial zueinander und bevorzugt auch zu der Drehachse L angeordnet, wobei der Strömungsquerschnitt der ersten Zuführleitung 6 erheblich größer ist als der Strömungsquerschnitt der zweiten Zuführleitung 8. Im Übrigen entspricht die in den Fig. 7a - 7e gezeigte Ausführungsform im Wesentlichen der in den Fig. 5a - 5e gezeigten Ausführungsform. Man erkennt auch bei der in Fig. 7e gezeigten perspektivischen Darstellung die zweite Zuführleitung 8, die innerhalb der ersten Zuführleitung 6 geführt wird. Die in den Fig. 7a - 7e gezeigte Ausführungsform ist beispielsweise für einen Sterilverteiler für einen Sterilisator vorgesehen sein.

Fig. 8 zeigt eine detaillierte Darstellung der in der Fig. 5a - 5e gezeigten Dichtungs- und Lagereinheiten 20, 100, die auf einem Behältnis 4 angeordnet sind. Man erkennt, dass das Sperrmedium, d. h. der Dampf, zunächst über die Zuleitung 9 in der Längsrichtung L geführt, wird dann unterhalb der Lagerung 100 umgeleitet und schließlich in radialer Richtung in den Anschluss 90, der auch in Fig. 4 dargestellt ist, eingeleitet wird. Das Bezugszeichen 6a bezieht sich auf ein Ende der ersten Zuführleitung 6 und das Bezugszeichen 8b auf Sprühköpfe, welche das Behältnis 4 mit einem sterilen Medium, d. h. bevorzugt mit Sterilluft, Sterilstickstoff, Kohlendioxid oder dergleichen versorgen.

## Patentansprüche

1. Verteilvorrichtung (1) für Medien (A, B) und insbesondere für Getränke, mit einem Behältnis (4), welches zur Aufnahme der Medien (A, B) geeignet ist, mit einer ersten Zuführleitung (6), welche dem Behältnis (4) ein erstes, bevorzugt flüssiges Medium (A) zuführt, mit einer zweiten Zuführleitung (8), welche dem Behältnis (4) ein zweites, bevorzugt gasförmiges Medium (B) zuführt, wobei die erste Zuführleitung (6) und die zweite Zuführleitung (8) stationär gegenüber einander angeordnet sind, das Behältnis (4) gegenüber der ersten Zuführleitung (6) und der zweiten Zuführeinrichtung (8) drehbar angeordnet ist und eine Dichtungseinrichtung (20) vorgesehen ist, welche die Zuführleitungen (6, 8) gegenüber dem Behältnis (4) abdichtet, wobei die erste Zufuhrleitung (6) und die zweite Zuführleitung (8) in einem Bereich des Behältnisses (4) in dieses munden, der stets oberhalb eines Füllstandes F des ersten Mediums (A) liegt, dadurch gekennzeichet, dass zwischen drehenden Bestandteilen (4) und stehenden Bestandteilen (6, 8) der Dichtungseinrichtung (20) ein Sperrmedium (S) führbar ist.

2. Verteilvorrichtung nach Anspruch 1, **dadurch gekennzeichnet, dass** die Dichtungseinrichtung (20) nicht mit dem ersten Medium (A) in Kontakt steht.

3. Verteilvorrichtung (1) nach wenigstens einem der vorangegangenen Ansprüche, **dadurch gekennzeichnet, dass** die Medien (A, B) von oben in das Behältnis (4) eingeführt werden und die Dichtungseinrichtung (20) oberhalb eines Füllstandes des ersten Mediums (A) angeordnet ist.

4. Verteilvorrichtung (1) nach wenigstens einem der vorangegangenen Ansprüche, **dadurch gekennzeichnet, dass** eine Zuführleitung (6, 8) neben der anderen Zuführleitung (8, 6) geführt wird.

5. Verteilvorrichtung (1) nach wenigstens einem der vorangegangenen Ansprüche, **dadurch gekennzeichnet, dass** das Behältnis (4) drehbar angeordnet ist.

6. Verteilvorrichtung (1) nach wenigstens einem der vorangegangenen Ansprüche, **dadurch gekennzeichnet, dass** das Sperrmedium (S) über einen Anschluss (90) zugeführt wird und dieser Anschluss (90) stationär angeordnet ist.

7. Verteilvorrichtung (1) nach wenigstens einem der vorangegangenen Ansprüche, dadurch gekennzeichet, dass das ein Ende (6a) der ersten Zuführleitung tiefer angeordnet ist als ein Ende (8a) der zweiten Zuführleitung (8).

8. Verteilvorrichtung (1) nach wenigstens einem der vorangegangenen Ansprüche, **dadurch gekennzeichnet, dass** die Dichtungseinrichtung (20) eine stationär angeordnete Wellenhülse (28) aufweist, innerhalb derer die Zuführleitungen (6, 8) angeordnet sind.

9. Verteilvorrichtung (1) nach Anspruch 7, **dadurch gekennzeichnet, dass** an dem Ende (8a) der zweiten Zuleitung (8) wenigstens ein Sprühkopf (8b) angeordnet ist, welcher das Medium in mehrere Raumrichtungen verteilt.

10. Dichtungseinrichtung (20) mit einer Lagereinheit (100) für eine Verteilvorrichtung für Medien (A,B), mit einer stationär angeordneten Wellenhülse (28), innerhalb derer wenigstens eine Zuführleitung (6,8) für ein Medium führbar ist, mit einem gegenüber der Wellenhülse (28) drehbar angeordneten Gehäuse (58), welches bezüglich einer Drehachse (L) des Gehäuses (58) radial außerhalb der Wellenhülse (28) angeordnet ist, wobei die Lagereinheit (100) das Gehäuse (58) drehbar gegenüber der Wellenhülse (28) lagert, wobei die Lagereinheit (100) in der Richtung der Drehachse (L) gegenüber der Dichtungseinrichtung (20) versetzt ist, **dadurch gekennzeichnet, dass** in einer radialen Richtung gegenüber der Drehachse (L) zwischen der Wellenhülse (28) und dem Gehäuse (58) ein Sperrmedium (S) führbar ist.

11. Dichtungseinrichtung (20) mit einer Lagereinheit (100) nach Anspruch 10, **dadurch gekennzeichnet, dass** die Lagereinheit (100) oberhalb der Dichtungseinrichtung (20) angeordnet ist.

12. Dichtungseinrichtung (20) mit einer Lagereinheit (100) nach wenigstens einem der vorangegangenen Ansprüche 10 - 11, **dadurch gekennzeichnet, dass** die Dichtungseinrichtung (20) eine Gleitringdichtung (20) ist.

13. Verteilvorrichtung für Medien nach wenigstens einem der vorangegangenen Ansprüche 1 - 9 mit einer Dichtungseinrichtung (20) nach wenigstens einem der vorangegangenen Ansprüche 10 - 12.

## Claims

1. Distribution apparatus (1) for media (A, B) and in particular for beverages, comprising a vessel (4) which is suitable for holding the media (A, B), comprising a first supply line (6) which supplies the vessel (4) with a first, preferably liquid medium (A), and comprising a second supply line (8) which supplies the vessel (4) with a second, preferably gaseous medium (B), wherein the first supply line (6) and the second supply line (8) are arranged in a stationary manner with respect to one another, the vessel (4) is arranged such that it can rotate with respect to the first supply line (6) and the second supply device (8), and a sealing device (20) is provided which seals off the supply lines (6, 8) with respect to the vessel (4), wherein the first supply line (6) and the second supply line (8) lead into the vessel (4) in a region of the latter which is always above a filling level F of the first medium (A), **characterised in that** a barrier medium (S) of the sealing device (20) can be guided between rotating components (4) and stationary components (6, 8).

2. Distribution apparatus according to claim 1, **characterised in that** the sealing device (20) is not in contact with the first medium (A).

3. Distribution apparatus (1) according to at least one of the preceding claims, **characterised in that** the media (A, B) are introduced into the vessel (4) from above and the sealing device (20) is arranged above a filling level of the first medium (A).

4. Distribution apparatus (1) according to at least one of the preceding claims, **characterised in that** one supply line (6, 8) is guided next to the other supply line (8, 6).

5. Distribution apparatus (1) according to at least one of the preceding claims, **characterised in that** the vessel (4) is arranged such that it can rotate.

6. Distribution apparatus (1) according to at least one of the preceding claims, **characterised in that** the barrier medium (S) is supplied via a connection (90) and this connection (90) is arranged in a stationary manner.

7. Distribution apparatus (1) according to at least one of the preceding claims, **characterised in that** one end (6a) of the first supply line is arranged lower than one end (8a) of the second supply line (8).

8. Distribution apparatus (1) according to at least one of the preceding claims, **characterised in that** the sealing device (20) comprises a shaft sleeve (28) which is arranged in a stationary manner and inside which the supply lines (6, 8) are arranged.

9. Distribution apparatus (1) according to claim 8, **characterised in that** at least one spray head (8b) is arranged at the end (8a) of the second supply line (8), which spray head distributes the medium in a number of spatial directions.

10. Sealing device (20) with a bearing unit (100) for a distribution apparatus for media (A, B), comprising a shaft sleeve (28) which is arranged in a stationary manner and inside which at least one supply line (6, 8) for a medium can be guided, comprising a housing (58) which is arranged such that it can rotate with respect to the shaft sleeve (28) and which is arranged radially outside the shaft sleeve (28) with respect to a rotation axis (L) of the housing (58), wherein the bearing unit (100) bears the housing (58) such that it can rotate with respect to the shaft sleeve (28), wherein the bearing unit (100) is offset with respect to the sealing device (20) in the direction of the rotation axis (L), **characterised in that** a barrier medium (S) can be guided between the shaft sleeve (28) and the housing (58) in a radial direction with respect to the rotation axis (L).

11. Sealing device (20) with a bearing unit (100) according to claim10, **characterised in that** the bearing unit (100) is arranged above the sealing device (20).

12. Sealing device (20) with a bearing unit (100) according to at least one of the preceding claims 10-11, **characterised in that** the sealing device (20) is a sliding ring seal (20).

13. Distribution apparatus for media according to at least one of the preceding claims 1-9 comprising a sealing device (20) according to at least one of the preceding claims 10-12.

## Revendications

1. Système répartiteur (1) de fluides (A, B) et en particulier de boissons, avec un récipient (4) prévu pour recevoir les fluides (A, B), avec une première conduite d'amenée (6) pour la conduction vers le récipient (4) d'un premier fluide (A), de préférence liquide, avec une deuxième conduite d'amenée (8) pour la conduction vers le récipient (4) d'un deuxième fluide (B), de préférence gazeux, la première conduite d'amenée (6) et la deuxième conduite d'amenée (8) étant disposées fixement l'une par rapport à l'autre, le récipient (4) étant disposé de manière rotative par rapport à la première conduite d'amenée (6) et à la deuxième conduite d'amenée (8), et un dispositif d'étanchéité (20) étant prévu, lequel rend étanche les conduites d'amenée (6, 8) par rapport au récipient (4), la première conduite d'amenée (6) et la deuxième conduite d'amenée (8) débouchant dans le récipient (4) à hauteur d'une zone de celui-ci qui se situe toujours au-dessus d'un niveau F du premier fluide (A), **caractérisé en ce qu'**un fluide d'arrêt (S) peut être conduit entre les composants rotatifs (4) et les composants fixes (6, 8) du dispositif d'étanchéité (20).

2. Système répartiteur selon la revendication 1, **caractérisé en ce que** le dispositif d'étanchéité (20) n'est pas en contact avec le premier fluide (A).

3. Système répartiteur (1) selon au moins une des revendications précédentes, **caractérisé en ce que** les fluides (A, B) sont introduits par le haut dans le récipient (4), et **en ce que** le dispositif d'étanchéité (20) est disposé au-dessus d'un niveau du premier fluide (A).

4. Système répartiteur (1) selon au moins une des revendications précédentes, **caractérisé en ce qu'**une conduite d'amenée (6, 8) est guidée à côté de l'autre conduite d'amenée (8, 6).

5. Système répartiteur (1) selon au moins une des revendications précédentes, **caractérisé en ce que** le récipient (4) est disposé de manière à être rotatif.

6. Système répartiteur (1) selon au moins une des revendications précédentes, **caractérisé en ce que** le fluide d'arrêt (S) est conduit via un raccord (90), et **en ce que** ce raccord (90) est fixement disposé.

7. Système répartiteur (1) selon au moins une des revendications précédentes, **caractérisé en ce qu'**une extrémité (6a) de la première conduite d'amenée est située plus bas qu'une extrémité (8a) de la deuxième conduite d'amenée (8).

8. Système répartiteur (1) selon au moins une des revendications précédentes, **caractérisé en ce que** le dispositif d'étanchéité (20) comporte une chemise d'arbre (28) fixement disposée, à l'intérieur de laquelle sont disposées les conduites d'amenée (6, 8).

9. Système répartiteur (1) selon la revendication 7, **caractérisé en ce qu'**au moins une tête de pulvérisation (8b) est disposée à l'extrémité (8a) de la deuxième conduite d'amenée (8), laquelle divise le fluide suivant plusieurs directions spatiales.

10. Dispositif d'étanchéité (20) avec une unité de palier (100) pour un système répartiteur de fluides (A, B), avec une chemise d'arbre (28) fixement disposée, à l'intérieur de laquelle peut être guidée au moins une conduite d'amenée (6, 8) pour un fluide, avec un carter (58) disposé de manière rotative par rapport à la chemise d'arbre (28), lequel est disposé radialement à l'extérieur de la chemise d'arbre (28) par rapport à un axe de rotation (L) du carter (58), le carter (58) étant monté de manière rotative dans l'unité de palier (100) par rapport à la chemise d'arbre (28), l'unité de palier (100) étant décalée par rapport au dispositif d'étanchéité (20) dans la direction de l'axe de rotation (L), **caractérisé en ce qu'**un fluide d'arrêt (S) peut être conduit entre la chemise d'arbre (28) et le carter (58) dans une direction radiale par rapport à l'axe de rotation (L).

11. Dispositif d'étanchéité (20) avec une unité de palier (100) selon la revendication 10, **caractérisé en ce que** l'unité de palier (100) est située au-dessus du dispositif d'étanchéité (20).

12. Dispositif d'étanchéité (20) avec une unité de palier (100) selon au moins une des revendications 10 et 11, **caractérisé en ce que** le dispositif d'étanchéité (20) est un joint d'étanchéité rotatif (20).

13. Système répartiteur de fluides selon au moins une des revendications 1 à 9, avec un dispositif d'étanchéité (20) selon au moins une des revendications 10 à 12.
